# EUROPÄISCHE PATENTSCHRIFT

(11) **EP 1 125 683 B1**
(45) Veröffentlichungstag und Bekanntmachung des Hinweises auf die Patenterteilung: **17.12.2003**
(21) Anmeldenummer: 01102536.8
(22) Anmeldetag: 06.02.2001
(51) Int. Cl.: B23Q 39/04, B23P 21/00, B23Q 3/155

(54) **Fertigungs- und/oder Montageautomat**
Manufacturing and/or assembling machine
Machine pour fabrication et/ou montage

(30) Priorität: 16.02.2000 DE 10006934
(43) Veröffentlichungstag der Anmeldung: 22.08.2001
(73) Patentinhaber: Feintool International Holding, 3250 Lyss (CH)
(72) Erfinder: Kumeth, Sigmund, 92280 Kastl (DE)
(74) Vertreter: Matschkur, Lindner Blaumeier Patent- und Rechtsanwälte

(56) Entgegenhaltungen:
- EP-A- 0 208 133
- DE-A- 19 728 264
- US-A- 4 523 359

## Beschreibung

Die Erfindung betrifft einen Fertigungs- und/oder Montageautomaten zum Fertigen oder Montieren eines Werkstücks, mit mehreren über eine gemeinsame Antriebseinrichtung antreibbaren Abtriebswellen, die mit Antriebswellen mehrerer auswechselbarer Montagestationen koppelbar sind, und einer den Betrieb der Antriebseinrichtung steuernden Steuerungseinrichtung. (DE-A-19728264)

Derartige Fertigungs- und/oder Montageautomaten sind zumeist in Form von Rundtaktmontageautomaten ausgebildet. Sie weisen einen zentralen Drehteller auf, an dem mehrere Werkstückträger angeordnet sind, an denen die Fertigung oder Montage des jeweiligen Werkstücks erfolgt. Um den Drehteller sind radial mehrere auswechselbare Montagestationen angeordnet, an denen ein Werkstück kontinuierlich zusammengesetzt wird. Derartige Fertigungs- und/oder Montageautomaten kommen überall dort zum Einsatz, wo maschinell in mehreren Fertigungs- oder Montagestufen ein Werkstück hergestellt wird, beispielsweise bei der Herstellung elektrotechnischer oder elektromechanischer Bauteile, feinmechanischer Werkstücke oder auch im pharmazeutischen Bereich wie auch in der Automobilindustrie.

In diesen Anlagen wird das Werkstück kontinuierlich zusammengesetzt oder hergestellt, wozu es getaktet zu den jeweiligen Montagestationen gebracht wird, welche einen einzelnen Arbeitsschritt durchführen oder das entsprechende erforderliche Bauteil zubringen. Derartige Anlagen sind von ihrem Aufbau her zur Fertigung eines einzigen Werkstückes konzipiert. Die einzelnen Komponenten sind entsprechend der jeweils durchzuführenden Arbeitsschritte ausgewählt, so dass für unterschiedliche Werkstücke separate Vorrichtungen verwendet werden müssen. Zur Umrüstung auf ein anderes Werkstück sind die Montagestationen austauschbar, indem jede Montagestation durch eine Steck-Rast-Verbindung mit dem Unterbau des Fertigungs- und/oder Montageautomaten verbunden ist. Jede Montagestation weist eine Antriebswelle auf, die mit einer Abtriebswelle einer zentralen Antriebseinrichtung gekoppelt ist. Der Ausbau einer Montagestation erfolgt durch das Lösen der Montagestation von dem Unterbau und durch das Abkoppeln der Antriebswelle. Üblicherweise ist zwischen den Abtriebswellen der zentralen Antriebseinrichtung und jeder Antriebswelle einer Montagestation eine Kupplung angeordnet, um das Auswechseln einer Montagestation zu vereinfachen. Beim Zusammenbau muss darauf geachtet werden, dass die Antriebswelle in der richtigen Winkelstellung zur Abtriebswelle steht. Dieses ist erforderlich, um die Synchronisation der ausgewechselten Montagestation mit den benachbarten Stationen sicherzustellen. Beim Einbau einer Montagestation muss also genauestens auf die richtige Winkelstellung ihrer Antriebswelle geachtet werden, da es ansonsten zu Fehlfunktionen oder sogar zu Beschädigungen der Montagevorrichtung kommen kann.

Der Erfindung liegt somit das Problem zugrunde, einen Fertigungs- und/oder Montageautomaten anzugeben, bei der das Auswechseln der Montagestationen einfacher und zuverlässiger erfolgen kann.

Zur Lösung dieses Problems ist bei einem Fertigungs- und/oder Montageautomaten der eingangs genannten Art erfindungsgemäß vorgesehen, dass zum Auswechseln einer Montagestation die Antriebseinrichtung derart steuerbar ist, dass die Antriebswellen in eine definierte Winkelstellung drehbar sind. Auf diese Weise kann der Ein- oder Ausbau einer Montagestation nur noch in einer genau bestimmten Winkelstellung einer Antriebswelle erfolgen. Ein Austausch bei einer anderen Winkelstellung ist nicht möglich.

Erfindungsgemäß ist ein der Antriebseinrichtung zugeordneter Winkelgeber vorgesehen, der mit der Steuerungseinrichtung kommuniziert und ein ein Maß für die Winkelstellung der Abtriebswellen darstellendes Signal liefert. Der Winkelgeber befindet sich im unteren Teil des Montageautomaten im Bereich des zentralen Antriebs. Das Anfahren der definierten Winkelstellung zum Austausch einer Montagestation kann damit automatisch von der Steuerungseinrichtung vorgenommen werden.

Mit besonderem Vorteil ist vorgesehen, dass die Antriebswelle der Montagestation beim Auswechseln an der Montagestation durch eine Verdrehsicherung fixierbar ist. Dadurch werden unkontrollierte Bewegungen der einzelnen Komponenten einer Montagestation verhindert, die bei nicht festgehaltener Antriebswelle erfolgen könnten. Es kann so nicht mehr zu Beschädigungen der Montagestation oder zu Verletzungen des Bedienpersonals kommen. Wenn eine Montagestation wieder eingebaut werden soll, steht sie bereits in der richtigen Winkelstellung.

Bei einem erfindungsgemäßen Fertigungs- und/oder Montageautomaten ist die Verdrehsicherung als Sperrschieber ausgebildet, der in eine Nut der Antriebswelle eingreift. Die Verwendung eines Sperrschiebers ermöglicht eine sichere mechanische Blockierung der Antriebswelle, so dass die Montagestation problemlos ausgewechselt werden kann.

Es kann auch vorgesehen sein, dass die Verdrehsicherung, gegebenenfalls der Sperrschieber, bei Erreichen der Auswechselstellung automatisch die Sicherungsstellung einnimmt. Die Betätigung des Sperrschiebers kann in diesem Fall automatisch von der Steuerungseinrichtung übernommen werden. Beim Anfahren der Auswechselstellung wird zunächst die Antriebswelle in die definierte Winkelstellung gedreht, anschließend wird der Sperrschieber automatisch in Sicherungsstellung gefahren. Auf diese Weise wird verhindert, dass das Bedienpersonal das Betätigen der Verdrehsicherung vergisst.

Es hat sich als besonders vorteilhaft erwiesen, wenn die Verdrehsicherung, gegebenenfalls der Sperrschieber, beim Anfahren der Auswechselstellung elektrisch oder pneumatisch betätigbar ist. Elektrische und/oder pneumatische Betriebsmittel sind ohnehin vorhanden, da durch sie die einzelnen Zusammenbauschritte gesteuert werden. Der Sperrschieber ist dabei im stromlosen bzw. drucklosen Zustand, d.h. bei ausgebauter Montagestation, aus Sicherheitsgründen ständig eingerückt.

Es kann auch vorgesehen sein, dass die Stellung der Verdrehsicherung, gegebenenfalls des Sperrschiebers, über einen mit der Steuerungseinheit verbundenen Näherungsschalter erfasst wird, der den Betrieb der Montagestation in Abhängigkeit von der Stellung der Verdrehsicherung, gegebenenfalls des Sperrschiebers, steuert. Damit besteht die Möglichkeit, bei eingerücktem Sperrschieber den Betrieb der Montagestation vollständig zu sperren. Dieses ist aus Sicherheitsgründen vorteilhaft, da die Inbetriebnahme einer Montagestation nur bei korrekter Winkelstellung ihrer Antriebswelle erfolgen darf.

Mit besonderem Vorteil sind die für den Betrieb der Verdrehsicherung und/oder des Näherungsschalters erforderlichen elektrischen und/oder pneumatischen Betriebsmittel beim Auswechseln einer Montagestation über automatisch ankuppelnde Steckverbindungen anschließbar bzw. trennbar. Ein kompliziertes Lösen oder Anschließen von Steckverbindungen entfällt, die Montagestation wird lediglich auf der Grundplatte fixiert. Alle weiteren Anschlüsse werden automatisch hergestellt.

Bei einem erfindungsgemäßen Fertigungs- und/oder Montageautomaten ist ein erstes Kupplungselement an einer Abtriebswelle angeordnet, das drehmomentübertragend mit einem zweiten Kupplungselement koppelbar ist, das an der Antriebswelle einer Montagestation angeordnet ist. Das Austauschen einer Montagestation ist damit sehr einfach, da keinerlei Schraubverbindungen zu lösen sind und der Austausch einer Montagestation schnell und ohne Werkzeug erfolgen kann.

Bevorzugt werden Kupplungen, bei denen eines der Kupplungselemente mindestens zwei Zapfen aufweist, die in entsprechend gegengleich geformte Ausnehmungen des anderen Kupplungselements eingreifen. Die Verwendung zweier einander gegenüberliegender Zapfen ist eine bewährte Methode zur Übertragung der Drehmomente.

Vorzugsweise weist bei einem erfindungsgemäßen Fertigungs- und/oder Montageautomaten eines der Kupplungselemente zwei Zapfen auf, deren Verbindungslinie nicht durch die Drehachse der Antriebswelle verläuft. Die Zapfen liegen einander nicht direkt gegenüber, sondern sind ausgehend von einer gegenüberliegenden Position auf einem Kreis um einen gewissen Betrag parallel verschoben, so dass sich lediglich eine einzige Ankoppelposition ergibt. Auf diese Weise wird verhindert, dass die beiden Kupplungselemente um 180° versetzt miteinander gekoppelt werden. Die Ausnehmungen sind entsprechend versetzt ausgebildet.

Ein besonders einfacher Austausch der Montagestationen wird ermöglicht, wenn die Kupplungselemente pleuelartig ausgebildete Ausgleichseinrichtungen zum Ausgleich von radialem, axialem und Winkelversatz aufweisen. Grundsätzlich muss die Antriebswelle mit der Abtriebswelle genau fluchten, um eine übermäßige Belastung der Wellenlagerung zu vermeiden. Durch die pleuelartigen Ausgleichseinrichtungen ist es jedoch möglich, die Montagestation auch anzukoppeln, wenn ein geringer Versatz vorhanden ist. Dieser kann z.B. dadurch zustande kommen, dass die Montagestation auf dem Unterbau nicht ganz genau positioniert wurde. In diesem Fall kann die pleuelartige Ausgleichseinrichtung diesen Versatz ausgleichen. Der Einbau wird auf diese Weise beschleunigt, da das Bedienpersonal sich nicht um die exakte Positionierung kümmern muss.

Besonders bevorzugt werden Fertigungs- und/oder Montageautomaten, bei denen die Steuerungseinrichtung derart ausgebildet ist, dass die Antriebswellen bei Gabe eines Stationswechselbefehls automatisch in die definierte Winkelstellung gedreht werden. Der gesamte Auswechselvorgang kann damit automatisiert werden, ein manuelles Justieren der einzelnen Wellen oder Ähnliches entfällt daher. Der Auswechselvorgang wird in die Steuerung des Montageautomaten integriert, so dass Fehlbedienungen vermieden werden.

Weitere Vorteile und Einzelheiten der Erfindung ergeben sich aus dem im folgenden beschriebenen Ausführungsbeispiel sowie anhand der Figuren. Die Figuren sind schematische Darstellungen und zeigen:
- Fig. 1: einen Fertigungs- und/oder Montageautomaten in Form einer Rundtaktanlage;
- Fig. 2: eine Seitenansicht einer erfindungsgemäßen Montagestation, die mit einem zentralen Antrieb des Montageautomaten verbunden ist;
- Fig. 3: eine zwischen dem Montageautomaten und der Montagestation angeordnete Kupplung in einem vergrößerten Maßstab;
- Fig. 4: die in Fig. 3 dargestellte Kupplung in Richtung der Antriebswelle.

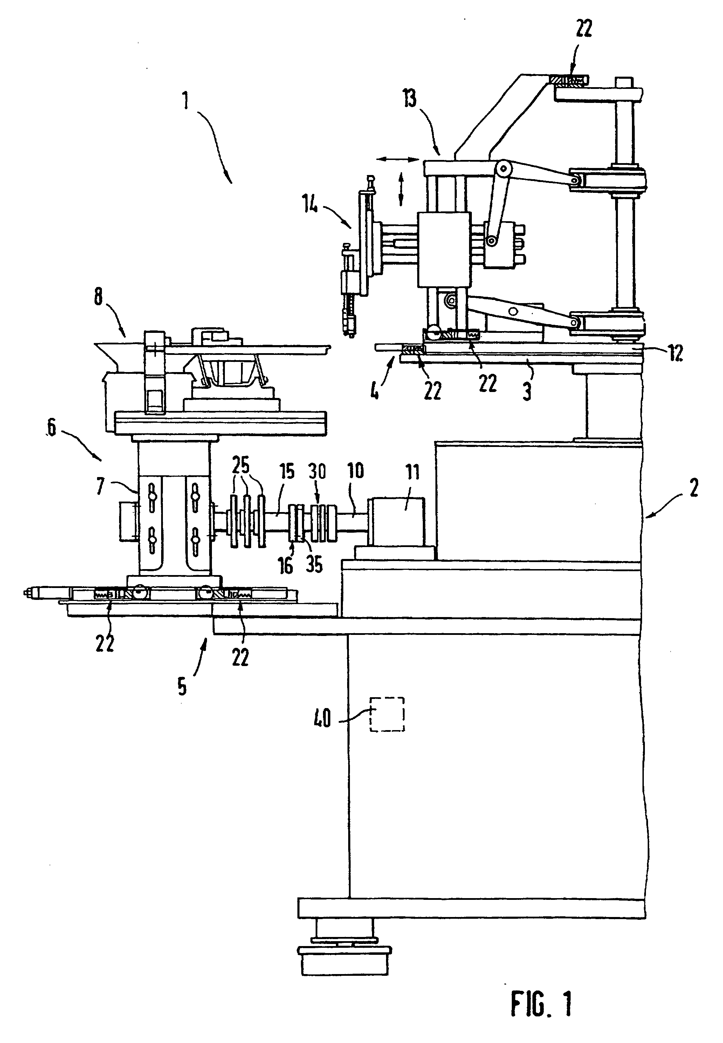

In Fig. 1 ist ein Fertigungs- und/oder Montageautomat in einer Teilansicht dargestellt. Der Fertigungs- und/oder Montageautomat 1 besteht aus einem Vorrichtungsgestell 2, an dem integriert ein eine Bewegungseinrichtung 3 bildender Drehteller angeordnet ist. An diesem Drehteller, welcher über einen nicht gezeigten, im unteren Teil des Vorrichtungsgestells 2 angeordneten motorischen Antrieb, z.B. in Form eines Kurvenscheibenantriebs rotierend antreibbar ist, sind randseitig mehrere Werkstückträger 4 angeordnet. An bzw. in diesen Werkstückträgern 4 erfolgt die Montage des jeweiligen Werkstücks. Um dies zu ermöglichen sind an am Vorrichtungsgestell 2 vorgesehenen Befestigungsaufnahmen 5 mehrere feststehende Montagestationen 6 vorgesehen, im gezeigten Beispiel in Form einer Zubringeinrichtung, bestehend aus einem Unterbauteil 7 sowie einer Zubringeinheit 8 vorgesehen. Die Befestigung des Unterbauteils 7 an der Befestigungsaufnahme 5 erfolgt über Steck-Rast-Verbindungen 22. Mit einer derartigen Zubringeinrichtung 6 ist es möglich, am Werkstückträger 4 zu verbauende Bauteile in die entsprechende, für eine Weiterbearbeitung erforderliche Position zu bringen. Bei diesen Montagestationen kann es sich beispielsweise um eine Zubringeinrichtung in Form einer Fördereinrichtung handeln, gleichermaßen kann sie auch als Stapeleinheit oder als Stanzeinrichtung zum Ausstanzen der Bauteile aus einem Stanzband ausgebildet sein. Die Montagestation 6 weist eine Antriebswelle 15 auf, die mit einer Abtriebswelle 10 eines Winkelgetriebes 11 gekoppelt ist. Die Kopplung erfolgt über das an der Antriebswelle 15 angeordnete Kupplungselement 16 und einen Aufnahmeflansch 35 eines getriebeseitigen Kupplungselements 30. Das Winkelgetriebe 11 steht in Antriebsverbindung mit dem nicht gezeigten Zentralantrieb der Fertigungs- und/oder Montagevorrichtung. Auf diese Weise wird die Zubringeinheit 8, die die Gegenstände aus einer Vielzahl derselben aufnehmenden Aufnahme an die Abnahmeposition heranfördert, angetrieben.

An einem am Vorrichtungsgestell 2 angeordneten, oberhalb des Drehtellers befindlichen Aufbauteller 12 ist ein Arbeitsmodul 13 vorgesehen, an dem eine Arbeitseinheit 14, im gezeigten Beispiel ein Greifer, angeordnet ist. Mittels dieses bewegbaren Greifers ist es möglich, im Bereich der Abnahmeposition an der Zubringeinheit 8 den angeförderten Gegenstand aufzunehmen, an den Werkstückträger 4 zu fördern und dort zu verbauen. Die Befestigung des Arbeitsmoduls 13 auf dem Aufbauteller 12 erfolgt über Steck-Rast-Verbindungen 22.

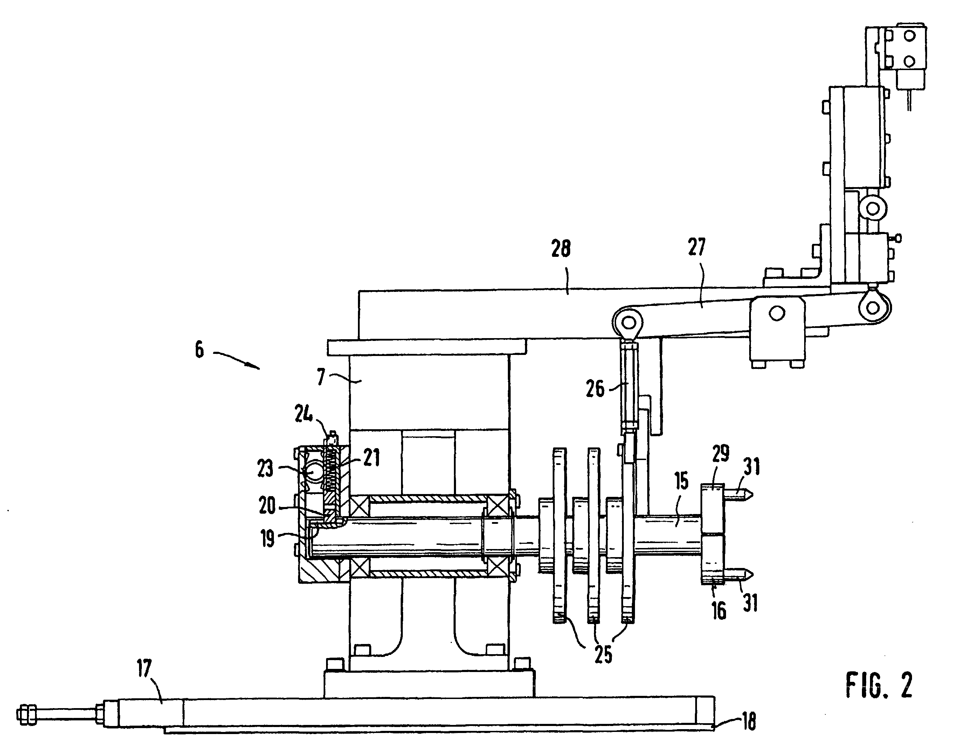

Fig. 2 zeigt eine Seitenansicht einer Montagestation 6. Sie weist eine Antriebswelle 15 mit einem an ihrem Ende angeordneten Kupplungselement 16 auf, das mit einem Aufnahmeflansch 35 eines getriebeseitigen Kupplungselements 30 koppelbar ist. Die Montagestation 6 besitzt an ihrer Unterseite eine Aufbauplatte 17, die über eine Steck-Rast-Verbindung mit einer Unterbaubefestigung 18 des Montageautomaten verbindbar ist. Durch Entriegeln der Unterbaubefestigung 18 kann die Aufbauplatte 17 und damit die gesamte Montagestation 6 aus der Unterbaubefestigung 18 gezogen und von dem Montageautomaten 1 getrennt werden. In dem Unterbau 7 der Montagestation 6 ist die Antriebswelle 15 gelagert. An dem im Bereich der Lagerung angeordneten Ende der Antriebswelle 15 befindet sich eine Passfedernut 19, die zur Aufnahme einer automatischen Verdrehsicherung dient. Die Verdrehsicherung ist als Sperrschieber 20 ausgebildet, der von einer Druckfeder 21 in die Passfedernut 19 der Antriebswelle 15 gedrückt wird. An dem Unterbau 7 der Montagestation 6 ist eine pneumatische Betätigung angeordnet, die als Pneumatikzylinder 23 ausgebildet ist und den Sperrschieber 20 entgegen der Kraft der Druckfeder 21 anhebt, so dass der Sperrschieber 20 nicht mehr in die Passfedernut 19 eingreift und die Antriebswelle 15 freigegeben wird. Der Sperrschieber 20 kann nur bei einer bestimmten Winkellage der Antriebswelle 15 in die Passfedernut 19 eingreifen. In dieser Position ist die Winkellage der Antriebswelle 15 fixiert. Die jeweilige Stellung des Sperrschiebers 20 wird durch einen Näherungshalter 24 erfasst und an eine Steuerungseinrichtung des Montageautomaten weitergegeben.

In dem freien Bereich der Antriebswelle 15 zwischen dem Unterbau 7 und dem mit dem Kupplungselement 16 versehenen Ende sind mehrere Kurvenscheiben 25 auf die Antriebswelle 15 geklemmt. Diese Kurvenscheiben 25 steuern die Montagefunktionen der Montagestation 6 über Steuerhebel, von denen beispielhaft ein Steuerhebel 26 dargestellt ist. Der Steuerhebel 26 wirkt mit einer Steuerstange 27 zusammen, die an einem Arm 28 der Montagestation 6 gelagert ist, zusammen. Die Steuerstange 27 ist mit weiteren Stangen bzw. Hebeln verbunden, die die Zubring- und/oder Montagefunktionen ausführen. Je nach der Komplexität der Montageaufgaben können bis zu drei derartige Kurvenscheiben 25 an der Antriebswelle 15 klemmend befestigt werden.

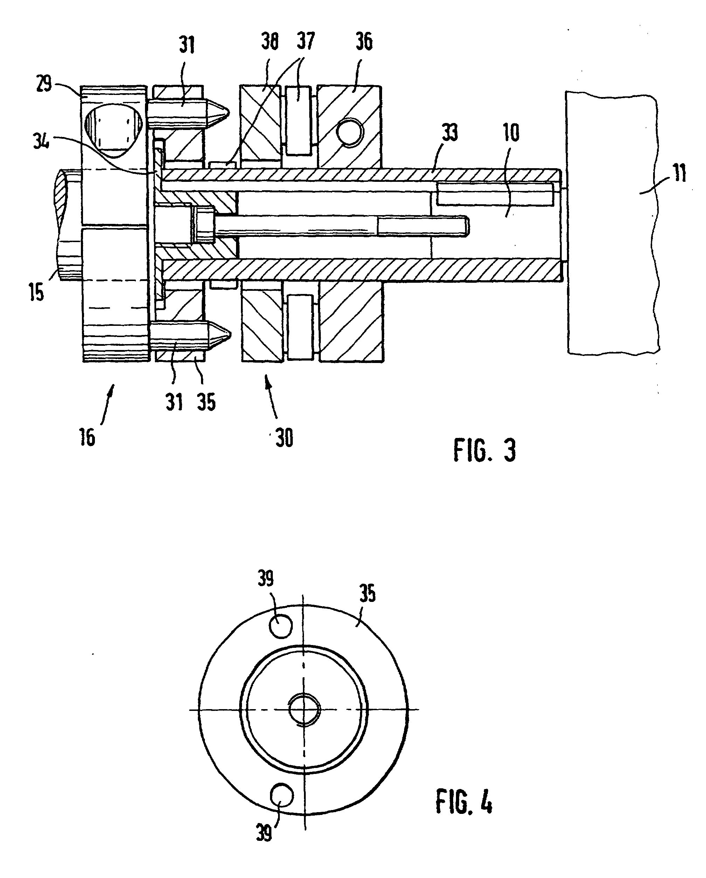

Am freien Ende der Antriebswelle 15 ist das Kupplungselement 16 angeordnet. Die Kupplung besteht insgesamt aus einem stationsseitigen Kupplungselement 16 und einem getriebeseitigen Kupplungselement 30. Beide Kupplungshälften sind in Fig. 3 in einer teilweise geschnittenen Seitenansicht in einem vergrößerten Maßstab gezeigt. Wie in Fig. 3 zu erkennen ist, weist die stationsseitige Kupplungshälfte einen Klemmring 29 auf, der zum Verklemmen des Kupplungselements 16 auf der Antriebswelle 15 dient. An dem Klemmring 29 sind zwei Zentrierbolzen 31 angeordnet, die in Richtung der getriebeseitigen Kupplungshälfte 30 weisen. Wie in Fig. 3 dargestellt ist, weist das Winkelgetriebe 11 eine Getriebeabtriebswelle 10 auf, auf der eine Klemmhülse 33 montiert ist. Am freien Ende der Getriebeabtriebswelle 10 befindet sich ein Anschlagflansch 34, der zur Befestigung des Aufnahmeflansches 35 dient. Der Aufnahmeflansch 35 weist zwei Bohrungen auf, die derart angeordnet sind, dass die Zentrierbolzen 31 der stationsseitigen Kupplungshälfte 16 diese durchgreifen können. An der Klemmhülse 33 ist außenseitig ein Klemmring 36 angeordnet, der mit Ausgleichspleueln 37 verbunden ist, die wiederum mit einem Zwischenflansch 38 gekoppelt sind. Auf diese Weise kann ein radialer oder axialer Versatz zwischen dem getriebeseitigen Kupplungselement 30 und dem stationsseitigen Kupplungselement 16 ausgeglichen werden. Der radiale Versatz kann +/- 2,5 mm, der Axialversatz +/- 2 mm und der Winkelversatz +/- 0,5° betragen.

Fig. 4 ist eine Ansicht der Kupplung aus Fig. 3 in Richtung der Antriebswelle. Die beiden zur Aufnahme der Zentrierbolzen 31 vorgesehenen Bohrungen 39 des Aufnahmeflansches 35 sind ausgehend von einer gegenüberliegenden Lage auf einem Kreis parallel um ein bestimmtes Maß verschoben. Auf diese Weise ist das Ankuppeln der beiden Kupplungselemente 16 und 30 nur bei einer einzigen Relativwinkellage möglich.

Der Ausbau einer Montagestation 6 erfolgt folgendermaßen. Im eingebauten Zustand ist die Montagestation 6 über ihre Aufbauplatte 17 starr mit der Unterbaubefestigung 18 des Montageautomaten verbunden. Die Zentrierbolzen 31 des stationsseitigen Kupplungselements 16 befinden sich in den Bohrungen 39 des Aufnahmeflansches 35 des getriebeseitigen Kupplungselements 30. Dadurch kann die Drehmomentübertragung vom Winkelgetriebe 11 über die Abtriebswelle 10, die Kupplungselemente 16 und 30 zur Antriebswelle 15 erfolgen. Zum Ausbau der Montagestation wird der Automatikbetrieb des Montageautomaten unterbrochen und der Automat bei Gabe eines entsprechenden Steuerbefehls seitens der Steuerungseinrichtung automatisch in die Umrüststellung gefahren. Die Umrüststellung ist durch eine Winkelstellung von 60° der zentralen Antriebswelle der Antriebseinrichtung des Montageautomaten definiert. Die Winkelstellung wird durch einen im Unterbau des Montageautomaten angeordneten Winkelgeber 40 ermittelt. Die Steuerungseinrichtung des Montageautomaten schaltet die pneumatische Betätigung, d.h. den Pneumatikzylinder 23 drucklos. Der Sperrschieber 20 wird durch die Kraft der gespannten Druckfeder 21 in seine Verriegelungsposition bewegt. Der Sperrschieber 20 greift in die Passfedernut 19 der Antriebswelle 15 ein und fixiert damit ihre Montagewinkelstellung. Der Näherungsschalter 24 reagiert auf die Lageveränderung des Sperrschiebers 20 und sendet ein Schaltsignal an die Steuerungseinrichtung des Montageautomaten, die daraufhin die Montagestation 6 für den Betrieb sperrt. Die Unterbaubefestigung 18 wird entriegelt und die Montagestation 6 wird aus den Führungen der Unterbaubefestigung 18 gezogen. Die Trennung erfolgt an dem Kupplungselement 16, indem die Zentrierbolzen 31 aus den Bohrungen 39 des Aufnahmeflansches 35 gezogen werden. Der in die Passfedernut 19 eingerückte Sperrschieber 20 fixiert die Winkellage der Antriebswelle 15 bei der ausgebauten Montagestation 6. Auf diese Weise wird ein reibungsloser Wiedereinbau der Station in Umrüststellung des Montageautomaten gewährleistet. Die korrekte Winkellage der Antriebswelle 15 ist für das automatische Einfädeln der Zentrierbolzen 31 in die Bohrungen 39 des Aufnahmeflansches 35 erforderlich. Darüber hinaus ist die Fixierung der Winkellage der Antriebswelle 15 ein Schutz der Bauteile vor Beschädigungen und insbesondere ein Schutz des Bedienpersonals vor Verletzungen. Ohne Verriegelung könnte es bei entsicherter Antriebswelle 15 und ausgebauter Montagestation 6 zu unkontrollierten Bewegungen der Bauteile kommen, was zu Verletzungen und Bauteilbeschädigungen führen könnte.

Bei dem Einbau einer Montagestation 6 wird der Montageautomat zunächst in seine Umrüststellung gefahren, sofern er sich noch nicht in dieser befindet. Die zentrale Antriebswelle des Automaten nimmt die Winkelstellung 60° ein, die durch den Winkelgeber 40 erfasst wird. In Umrüststellung wird die Aufbauplatte 17 der Montagestation 6 und damit die gesamte Montagestation 6 in die Führungen der Unterbaubefestigung 18 geschoben. Dabei ist die Antriebswelle 15 durch den Sperrschieber 20 in der für den Umrüstvorgang vorgesehenen Winkellage fixiert. Beim Einschieben der Montagestation 6 fädeln die Zentrierbolzen 31 über ihre Zentrierspitzen automatisch in die Bohrungen 39 des Aufnahmeflansches 35 ein und stellen damit die Drehmomentverbindung zwischen der Antriebswelle 15 und dem Winkelgetriebe 11 des Montageautomaten her. Die Unterbaubefestigung 18 wird verriegelt, so dass die Montagestation 6 am Montageautomaten in einer exakt definierten Position fixiert wird. Durch die Steuerung des Montageautomaten wird der Pneumatikzylinder 23 betätigt, der den Sperrschieber 20 in seine entriegelte Position bewegt. Dadurch ist die Antriebswelle 15 von der Verdrehsicherung freigegeben. Der Näherungsschalter 24 signalisiert die entriegelte Position des Sperrschiebers 20 an die Steuerungseinrichtung des Montageautomaten, die die Montagestation 6 für den Betrieb freigibt. Wenn sämtliche Montagestationen 6 des Montageautomaten für den Betrieb freigegeben sind, kann der Automatikbetrieb wieder aufgenommen werden.

## Patentansprüche

1. Fertigungs- und/oder Montageautomat (1) zum Fertigen oder Montieren eines Werkstücks, mit mehreren über eine gemeinsame Antriebseinrichtung antreibbaren Abtriebswellen (15), die mit Antriebswellen mehrerer auswechselbarer Montagestationen (6) koppelbar sind, und einer den Betrieb der Antriebseinrichtung steuernden Steuerungseinrichtung, **dadurch gekennzeichnet, dass** zum Auswechseln einer Montagestation (6) die Antriebseinrichtung derart steuerbar ist, dass die Antriebswellen (15) in eine definierte Winkelstellung drehbar sind.

2. Fertigungs- und/oder Montageautomat nach Anspruch 1, **dadurch gekennzeichnet, dass** ein der Antriebseinrichtung zugeordneter Winkelgeber (40) vorgesehen ist, der mit der Steuerungseinrichtung kommuniziert und ein ein Maß für die Winkelstellung der Abtriebswellen (10) darstellendes Signal liefert.

3. Fertigungs- und/oder Montageautomat nach Anspruch 1 oder 2, **dadurch gekennzeichnet, dass** die Antriebswelle (15) der Montagestation (6) beim Auswechseln an der Montagestation (6) durch eine Verdrehsicherung fixierbar ist.

4. Fertigungs- und/oder Montageautomat nach Anspruch 3, **dadurch gekennzeichnet, dass** die Verdrehsicherung als Sperrschieber (20) ausgebildet ist, der in eine Nut (19) der Antriebswelle (15) eingreift.

5. Fertigungs- und/oder Montageautomat nach Anspruch 3 oder 4, **dadurch gekennzeichnet, dass** die Verdrehsicherung, gegebenenfalls der Sperrschieber (20), bei Erreichen der Auswechselstellung automatisch die Sicherungsstellung einnimmt.

6. Fertigungs- und/oder Montageautomat nach Anspruch 5, **dadurch gekennzeichnet, dass** die Verdrehsicherung, gegebenenfalls der Sperrschieber (20), beim Anfahren der Auswechselstellung elektrisch oder pneumatisch betätigbar ist.

7. Fertigungs- und/oder Montageautomat nach einem der Ansprüche 3 bis 6, **dadurch gekennzeichnet, dass** die Stellung der Verdrehsicherung, gegebenenfalls des Sperrschiebers (20), über einen mit der Steuerungseinheit verbundenen Näherungsschalter (24) erfasst wird, der den Betrieb der Montagestation (6) in Abhängigkeit von der Stellung der Verdrehsicherung, gegebenenfalls des Sperrschiebers (20), steuert.

8. Fertigungs- und/oder Montageautomat nach einem der Ansprüche 3 bis 8, **dadurch gekennzeichnet, dass** für den Betrieb der Verdrehsicherung und/oder des Näherungsschalters (24) erforderliche elektrische und/oder pneumatische Betriebsmittel beim Auswechseln einer Montagestation (6) über automatisch ankuppelnde Steckverbindungen anschließbar bzw. trennbar sind.

9. Fertigungs- und/oder Montageautomat nach einem der vorangehenden Ansprüche, **dadurch gekennzeichnet, dass** ein erstes Kupplungselement (30) an einer Abtriebswelle (10) angeordnet ist, das drehmomentübertragend mit einem zweiten Kupplungselement (16) koppelbar ist, das an der Antriebswelle (15) einer Montagestation (6) angeordnet ist.

10. Fertigungs- und/oder Montageautomat nach Anspruch 9, **dadurch gekennzeichnet, dass** eines der Kupplungselemente (16) mindestens zwei Zapfen (31) aufweist, die in entsprechend gegengleich geformte Ausnehmungen (39) eines Aufnahmeflansches (35) des anderen Kupplungselements (30) eingreifen.

11. Fertigungs- und/oder Montageautomat nach Anspruch 10, **dadurch gekennzeichnet, dass** eines der Kupplungselemente (16) zwei Zapfen (31) aufweist, deren Verbindungslinie nicht durch die Drehachse der Antriebswelle (15) verläuft.

12. Fertigungs- und/oder Montageautomat nach einem der vorangehenden Ansprüche, **dadurch gekennzeichnet, dass** mindestens ein Kupplungselement pleuelartig ausgebildete Ausgleichseinrichtungen (37) zum Ausgleich von radialem, axialem und Winkelversatz aufweist.

13. Fertigungs- und/oder Montageautomat nach einem der vorangehenden Ansprüche, **dadurch gekennzeichnet, dass** die Steuerungseinrichtung derart ausgebildet ist, dass die Antriebswellen (15) bei Gabe eines Stationswechselbefehls automatisch in die definierte Winkelstellung gedreht werden.

## Claims

1. Manufacturing and/or assembling machine (1) for manufacturing and assembling a workpiece, having a plurality of output shafts (15) which are drivable via a common drive device and which may be coupled to drive shafts of a plurality of exchangeable assembly bays (6), and having a control device for controlling the operation of the drive device, **characterised in that** in order to exchange an assembly bay (6), the drive device may be so controlled that the drive shafts (15) are rotatable into a specific angular position.

2. Manufacturing and/or assembling machine according to claim 1, **characterised in that** an angle encoder (40) is provided, which is allocated to the drive device and communicates with the control device and supplies a signal representing a measurement of the angular position of the output shafts (10).

3. Manufacturing and/or assembling machine according to claim 1 or 2, **characterised in that** the drive shaft (15) is fixable to the assembly bay (6) by a locking element.

4. Manufacturing and/or assembling machine according to claim 3, **characterised in that** the locking element is formed as a rotary piston (20), which engages in a groove (19) in the drive shaft (15).

5. Manufacturing and/or assembling machine according to claim 3 or 4, **characterised in that** the locking element, optionally the rotary piston (20), automatically adopts the fixing position when the exchange position is reached.

6. Manufacturing and/or assembling machine according to claim 5, **characterised in that** the locking device, optionally the rotary piston (20), is actuatable electrically or pneumatically upon reaching the exchange position.

7. Manufacturing and/or assembling machine according to one of claims 3 to 6, **characterised in that** the position of the locking element, optionally the rotary piston (20), is detected via a proximity switch (24) connected to the control unit, which switch controls operation of the assembly bay (6) according to the position of the locking element, optionally the rotary piston (20).

8. Manufacturing and/or assembling machine according to one of claims 3 to 8, **characterised in that** any electrical and/or pneumatic operating means needed to operate the locking element and/or the proximity switch (24) are attachable and/or removable upon exchange of the assembly bay (6) via automatically couplable plug connections.

9. Manufacturing and/or assembling machine according to one of the preceding claims, **characterised in that** a first coupling element (30) is disposed on an output shaft (10), which may be coupled so as to carry torque to a second coupling element (16), which is disposed on the drive shaft (15) of an assembly bay (6).

10. Manufacturing and/or assembling machine according to claim 9, **characterised in that** one of the coupling elements (16) has at least two pins (31), which engage in correspondingly formed recesses (39) of a receiving flange (35) of the other coupling element (30).

11. Manufacturing and/or assembling machine according to claim 10, **characterised in that** one of the coupling elements (16) has two pins (31) whose line of connection does not pass through the axis of rotation of the drive shaft (15).

12. Manufacturing and/or assembling machine according to one of the preceding claims, **characterised in that** at least one coupling element has balancing devices (37) formed as a con-rod in order to compensate for radial, axial and rotational displacement.

13. Manufacturing and/or assembling machine according to one of the preceding claims, **characterised in that** the control device is so formed that the drive shafts (15) are automatically rotated into the specified angular position when a bay-change command is issued.

## Revendications

1. Machine automatique (1) pour la finition et/ou le montage d'une pièce d'outillage, du type comportant plusieurs arbres entraînés (15) susceptibles d'être entraînés par un système commun d'entraînement, et qui peuvent être accouplés avec les arbres d'entraînement de plusieurs postes de montage interchangeables (6), et un système de commande, commandant la fonctionnement du système d'entraînement, **caractérisée en ce que** en vue l'échange d'un poste de montage (6), le système d'entraînement peut être entraîné d'une manière telle que les arbres d'entraînement (15) peuvent être amenés par rotation dans une position angulaire définie.

2. Machine automatique pour la finition et/ou le montage selon la revendication 1, **caractérisée en ce qu'**il est prévu un sélecteur d'angle (40), qui communique avec le système de commande et qui délivre un signal représentant une valeur de la position angulaire de l'arbre entraîné (10).

3. Machine automatique pour la finition et/ou le montage, selon l'une des revendications 1 ou 2, **caractérisée en ce que** l'arbre d'entraînement (15) du poste de montage (6) peut être, lors d'un échange, fixé au poste de montage (6) par une sécurité anti-rotation.

4. Machine automatique pour la finition et/ou le montage selon la revendication 3, **caractérisée en ce que** la sécurité anti-rotation est constituée par une coulisse de blocage (20) s'accrochant dans une rainure (19) de l'arbre d'entraînement (15).

5. Machine automatique pour la finition et/ou le montage selon l'une des revendications 3 ou 4, **caractérisée en ce que** la sécurité anti-rotation, éventuellement la coulisse de blocage (20), se place automatiquement dans la position de sécurité dès qu'est atteinte la position d'échange.

6. Machine automatique pour la finition et/ou le montage selon la revendication 5, **caractérisée en ce que** la sécurité anti-rotation, éventuellement la coulisse de blocage (20) peut être actionnée électriquement ou pneumatiquement lors de l'arrivée à la position d'échange.

7. Machine automatique pour la finition et/ou le montage selon l'une quelconque des revendications 3 à 6, **caractérisée en ce que** la position de la sécurité anti-rotation, éventuellement de la coulisse de blocage (20) est détectée par un interrupteur d'approche (24) relié à l'unité de commande et qui commande le fonctionnement du poste de montage (6) en fonction de la position de la sécurité anti-rotation éventuellement de la coulisse de blocage (20).

8. Machine automatique pour la finition et/ou le montage selon l'une quelconque des revendications 3 à 7, **caractérisée en ce que** en vue de la fonctionnement de la sécurité anti-rotation et/ou de l'interrupteur d'approche (24), les moyens de fonctionnement électrique et/ou pneumatique nécessaires lors de l'échange d'un poste de montage (6) peuvent être connectés ou déconnectés par des liaisons à enfichage s'accouplant automatiquement.

9. Machine automatique pour la finition etou le montage selon l'une quelconque des revendications précédentes, **caractérisée en ce qu'**un premier élément d'accouplement (30) est disposé sur un arbre d'entraînement (10) qui peut être accouplé à un second élément d'accouplement (16) en transmettant le moment de rotation et qui est disposé sur l'arbre d'entraînement (15) d'un poste de montage.

10. Machine automatique pour la finition et/ou le montage selon la revendication 9, **caractérisée en ce que** l'un des éléments d'accouplement (16) présente au moins deux chevilles (31) qui s'accrochent dans des évidements (39) de formes correspondantes opposées d'un flasque de réception (35) de l'autre élément d'accouplement (30).

11. Machine automatique pour la finition et/ou le montage selon la revendication 10, **caractérisée en ce que** l'un des éléments d'accouplement (16) présente deux chevilles (31) dont les lignes de liaison ne passent pas par l'axe de rotation de l'arbre d'entraînement (15).

12. Machine automatique pour la finition et/ou le montage selon l'une quelconque des revendications précédentes, **caractérisée en ce que** au moins un élément d'accouplement présente des systèmes de compensation (37) du genre bielle en vue de compenser les déplacements radiaux, axiaux et angulaires.

13. Machine automatique pour la finition et/ou le montage selon l'une quelconque des revendications précédentes, **caractérisée en ce que** le système de commande est conçu de manière telle que les arbres d'entraînement (15), lors de la sélection d'un ordre d'échange de poste sont amenés automatiquement par rotation dans la position angulaire définie.
